# EUROPÄISCHE PATENTANMELDUNG

(11) **EP 0 926 040 A2**
(43) Veröffentlichungstag der Anmeldung: **30.06.1999**
(21) Anmeldenummer: 98123539.3
(22) Anmeldetag: 16.12.1998
(51) Int. Cl.: B62D 1/10

(54) **Lenkrad-Nabe**

(30) Priorität: 24.12.1997 DE 29722825 U
(71) Anmelder: TRW Automotive Safety Systems GmbH, 63743 Aschaffenburg (DE)
(72) Erfinder: Nigrin, Anke, 97816 Lohr (DE); Tschöp, Winfried, 97892 Kreuzwertheim (DE)
(74) Vertreter: Degwert, Hartmut, Dipl.-Phys.

(57) **Zusammenfassung**

Ein Kraftfahrzeug-Lenkrad weist einen gießtechnisch hergestellten Nabenbereich auf, der einen zylindrischen Teil und einen daran einstückig angeformten Flansch umfaßt. In dem Nabenbereich ist eine Bohrung für die Aufnahme des Lenksäulenendes vorgesehen. Im Nabenbereich (1) sind parallel zur Achse der Bohrung (2) durchgehende Schlitze (3, 4, 5) angeordnet, durch die Materialbereiche (6, 7) ausgebildet sind, die unter Verringerung des Bohrungsdurchmessers elastisch gegeneinander verspannbar sind, um das Lenkrad auf dem Lenksäulenende radial festzuspannen.

## Beschreibung

Die Erfindung betrifft ein Lenkrad für Kraftfahrzeuge oder dergl. mit einem gießtechnisch hergestellten Nabenbereich aus Metall, der einen zylindrischen Teil und einen daran einstückig angeformten Flansch umfaßt und in dem eine Bohrung für die Aufnahme des Lenksäulenendes vorgesehen ist.

Bei der Befestigung eines Lenkrades auf der Lerksäule wird üblicherweise eine auf das Lenkradende aufgeschraubte Mutter verwendet, mittels derer die Lenkradnabe auf einen Konussitz der Lenksäule aufgepreßt wird. Die Übertragung der Lenkkräfte erfolgt kraftschlüssig. Als weitere Sicherung zur Übertragung des Drehelements ist üblicherweise zwischen Lenksäule und Lenkradnabe noch eine Kerbverzahnung vorgesehen. Die axiale Festlegung erfolgt ausschließlich über die auf die Lenksäule aufgeschraubte Mutter.

Bei dieser Art der Lenkradbefestigung kann das heute bei fast allen Kraftfahrzeugen serienmäßig vorgesehene Airbag-Modul erst nach der Lenkradmontage eingesetzt werden, was zu Verzögerungen bei der Endmontage führt und deswegen als nachteilig angesehen wird. Selbst wenn man ein ringförmiges Airbag-Modul mit zentralem Zugang zur Lenksäule vorsehen würde, müßte bei der Endmontage noch eine Abdeckkappe für das Airbag-Modul angebracht werden, was bei den heute aus wirtschaftlichen Gründen extrem kurzen Endmontagezeiten ebenfalls unerwünscht ist.

Man hat daher schon verschiedene Vorschläge gemacht, wie die bisher übliche Lenkradmontage umgangen und wie ein komplett ausgestattetes Lenkrad möglichst kostengünstig endmontiert werden kann. Sofern dabei parallel zur Lenksäule angeordnete, von der Rückseite des Lenkrades her einzusetzende Schrauben vorgesehen sind, ist die Montage sehr erschwert, weil der Raum hinter dem Lenkrad bei vielen Fahrzeugmodellen nur schwer zugänglich ist. Besser sind demgegenüber Verbindungsmöglichkeiten, bei denen eine oder mehrere Befestigungsschrauben radial zur Lenkradsäule angeordnet sind. Bei derartigen Befestigungsmethoden sind jedoch außer den eigentlichen Schrauben weitere Befestigungsteile erforderlich, um das Lenkrad hinsichtlich axialer Festlegung zur Lenksäule und hinsichtlich Übertragung der Lenkkräfte sicher mit der Lenksäule verbinden zu können. Dabei ist die Handhabung zusätzlicher Befestigungsteile oft ebenfalls mit Schwierigkeiten verbunden und erfordert bei der Endmontage noch zu viel Zeit.

Es besteht somit die Aufgabe, eine konstruktive Möglichkeit zur Ausnutzung der letztgenannten Lenkradbefestigungsmethode vorzuschlagen, die ohne zusätzliche Befestigungsteile auskommt und bei der die Befestigung des Lenkrades bei der Endmontage mit einem Minimum an Zeitaufwand durchgeführt werden kann, ohne daß hinsichtlich axialer Festlegung des Lenkrades an der Lenksäule sowie hinsichtlich der Übertragung der Lenkkräfte irgendwelche Einschränkungen in Kauf genommen werden müssen.

Zur Lösung dieser Aufgabe wird bei einem Lenkrad der eingangs genannten Art vorgeschlagen, daß im Nabenbereich durch parallel zur Achse der Bohrungen angeordnete Schlitze Materialbereiche ausgebildet sind, die unter Verringerung des Bohrungsdurchmessers elastisch gegeneinander verspannbar sind. Die Materialbereiche werden vorzugsweise durch eine tengential zur Bohrung angeordnete Schraube gegeneinander verspannt.

Diesem Vorschlag liegt die Erwägung zugrunde, daß man keine zusätzlichen Befestigungselemente benötigt, wenn der Nabenbereich durch Schlitze derart unterteilt ist, daß in unverspanntem Zustand das für das Aufsetzen des Lenkrades auf die Lenksäule erforderliche Montagespiel vorgesehen werden kann und daß das Lenkrad in verspanntem Zustand sicher auf die Lenksäule aufgeklemmt ist. Auch hier ist für die Übertragung der Lenkkräfte eine kraftschlüssige Verbindung vorgesehen, die sicherheitshalber durch eine formschlüssige Verbindung, beispielsweise durch eine Kerbverzahnung, überlagert werden kann. Zur axialen Fixierung des Lenkrades an der Lenksäule ist ferner vorgesehen, daß die tangential zur Bohrung für die Lenksäule angeordnete Schraube mit etwa der Hälfte ihres Querschnittes innerhalb der Bohrung liegend angeordnet ist, so daß sie in endmontiertem Zustand in eine an der Lenksäule außen umlaufende, im Querschnitt etwa halbkreisförmige Nut eingreift.

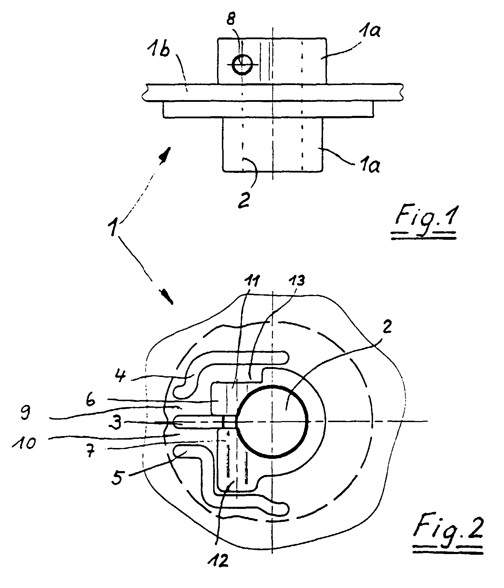

Weitere vorteilhafte und zweckmäßige Ausgestaltungen des Erfindungsgedankens sind in den Unteransprüchen 4 bis 11 beschrieben. Einzelheiten werden anhand des in Figur 1 und 2 dargestellten Ausführungsbeispiels näher erläutert. Es zeigen:
Figur 1 den Nabenbereich eines Lenkrades an der Seitenansicht,
Figur 2 den gleichen Nabenbereich in der Draufsicht.

Der gießtechnisch hergestellte Nabenbereich 1 umfaßt einen zylindrischen Teil 1a und einen daran einstückig angeformten Flansch 1b, wobei der zylindrische Teil 1a oberhalb und unterhalb des Flansches 1b unterschiedliche Durchmesser aufweist und der Flansch 1b einen unteren, begrenzten Innenbereich und einen darüberliegenden, sich weiter nach außen erstreckenden Bereich umfaßt, der zur Aufnahme eines Airbag-Moduls topfförmig ausgebildet sein kann und an den sich - bei einem einstückig gießtechnisch hergestellten Lenkradskelett - die Lenkradspeichen anschließen können. Für die hier zu erläuternde Erfindung genügt es, den zentralen, dargestellten Nabenbereich 1 zu betrachten.

Dieser besitzt eine Bohrung 2 für die Aufnahme des Lenksäulenendes, das bei montiertem Lenkrad vom Nabenbereich 1 umschlossen ist. Im Nabenbereich 1 ist ein mittlerer Schlitz 3 vorgesehen, der radial zur Bohrung 2 verläuft und sich durch den zylindrischen Teil 1a und den Flansch 1b erstreckt. Außerdem sind im Flansch 1b äußere Schlitze 4 und 5 mit je einem parallel zum mittleren Schlitz 3 verlaufenden Abschnitt ausgebildet, so daß zwischen den Enden der Schlitze 3, 4, 5 Biegezonen in Form schmaler Materialbrücken 9, 10 stehen bleiben. Auf diese Weise wird innerhalb des einstückig gießtechnisch hergestellten Nabenbereiches ein elastisch verformbarer Klemmbereich ausgebildet, bei dem die Materialbereiche 6 und 7 unter Verringerung des Bohrungsdurchmessers elastisch gegeneinander verspannbar sind. In unverspanntem Zustand weist der Bohrungsdurchmesser das für das Aufsetzen des Lenkrades auf die Lenksäule erforderliche Montagespiel auf, wobei andererseits die Materialbereiche 6 und 7 in ausreichendem Maß aufeinander zubewegbar sind, so daß das Montagespiel beseitigt und eine sichere Klemmverbindung hergestellt werden kann. Mit anderen Worten, es müssen die verbleibenden Materialbrücken 9 und 10 ohne Zerstörung des gießtechnisch hergestellten Nabenbereiches ausreichend auf Biegung beanspruchbar sein.

Zum Verspannen ist eine tangential zur Bohrung 2 angeordnete Schraube vorgesehen, wozu in einem Materialbereich 6 eine Durchgangsbohrung 11 und im anderen Materialbereich 7 eine Gewindebohrung 12 angeordnet ist. Die Schraube kann in üblicher Weise unverlierbar mit dem Nabenbereich verbunden sein, d.h., sie ist für die Endmontage bereits richtig plaziert und muß lediglich noch angezogen werden, wobei sich der Schraubenkopf auf eine Anlagefläche 13 abstützt, die an einem Materialbereich 6 parallel zur Achse der Bohrung 2 und zum mittleren Schlitz 3 verlaufend angeordnet ist. Die äußeren Schlitze 4 und 5 können, wie dargestellt, ausgeführt werden, sie können aber auch eine andere Form haben, wenn der Nabenbereich im Hinblick auf weitere Funktionen - z.B. Anordnung von weiteren Befestigungsbohrungen - eine andere Schlitzführung erforderlich macht.

Die Bohrungen 11 und 12 sind bezüglich der Bohrung 2 tangential so angeordnet, daß die Schraube mit etwa der Hälfte ihres Querschnitts 8 in die Bohrung 2 eingreift. Die zugehörige Lenksäule weist eine umlaufende, im Querschnitt etwa halbkreisförmige Nut auf, in die die Schraube in endmontiertem Zustand ebenfalls eingreift und so eine Sicherung für die axiale Festlegung des Lenkrades auf der Lenksäule bildet.

Die vorgeschlagene Ausbildung des Nabenbereiches erlaubt eine sichere, einfache, zeitsparende Endmontage des Lenkrades auf der Lenksäule, so daß die eingangs geschilderten Nachteile herkömmlicher Befestigungsmethoden überwunden sind.

## Patentansprüche

1. Lenkrad mit einem gießtechnisch hergestellten Nabenbereich, der einen zylindrischen Teil und einen daran einstückig angeformten Flansch umfaßt und in dem eine Bohrung für die Aufnahme des Lenksäulenendes vorgesehen ist, dadurch gekennzeichnet, daß im Nabenbereich (1) durch parallel zur Achse der Bohrung (2) angeordnete, durchgehende Schlitze (3, 4, 5) Materialbereiche (6, 7) ausgebildet sind, die unter Verringerung des Bohrungsdurchmessers elastisch gegeneinander verspannbar sind.

2. Lenkrad nach Anspruch 1, dadurch gekennzeichnet, daß die Materialbereiche (6, 7) durch eine tangential zur Bohrung (2) angeordnete Schraube gegeneinander verspannbar sind.

3. Lenkrad nach Anspruch 2, dadurch gekennzeichnet, daß die Schraube mit etwa der Hälfte ihres Querschnitts (8) innerhalb der Bohrung (2) liegend angeordnet ist.

4. Lenkrad nach einem der Ansprüche 1 bis 3, dadurch gekennzeichnet, daß im Nabenbereich (1) drei Schlitze (3, 4, 5) vorgesehen sind.

5. Lenkrad nach Anspruch 4, dadurch gekennzeichnet, daß ein mittlerer Schlitz (3) radial zur Achse der Bohrung (2) angeordnet ist, der sich durch den zylindrischen Teil (1a) und den Flansch (1b) erstreckt.

6. Lenkrad nach Anspruch 5, dadurch gekennzeichnet, daß im Flansch (1b) äußere Schlitze (4, 5) mit je einem parallel zum mittleren Schlitz (3) verlaufenden Abschnitt ausgebildet sind, so daß zwischen den Enden der Schlitze (3, 4, 5) Biegezonen in Form schmaler Materialbrücken (9, 10) stehenbleiben.

7. Lenkrad nach Anspruch 6, dadurch gekennzeichnet, daß in einem Materialbereich (6) eine Durchgangsbohrung (11) und im anderen Materialbereich (7) eine Gewindebohrung (12) vorgesehen ist.

8. Lenkrad nach Anspruch 7, dadurch gekennzeichnet, daß an einem Materialbereich (6) eine äußere, parallel zur Achse der Bohrung (2) und zum mittleren Schlitz (4) verlaufende Anlagefläche (13) für einen Schraubenkopf ausgebildet ist.

9. Lenkrad nach einem der Ansprüche 1 bis 8, dadurch gekennzeichnet, daß die Bohrung (2) eine Kerbverzahnung aufweist.

10. Lenkrad nach einem der Ansprüche 1 bis 9, dadurch gekennzeichnet, daß die Schlitze (3, 4, 5) gießtechnisch hergestellt sind.

11. Lenkrad nach einem der Ansprüche 1 bis 10, dadurch gekennzeichnet, daß die Schlitze (3, 4, 5) spangebend hergestellt sind.
